(19) Europäisches Patentamt
European Patent Office
Office européen des brevets

(11) Veröffentlichungsnummer: **0 023 570**
**B1**

# (12) EUROPÄISCHE PATENTSCHRIFT

(45) Veröffentlichungstag der Patentschrift: **02.01.85**

(51) Int. Cl.³: **C 08 G 63/72**

(21) Anmeldenummer: **80103696.3**

(22) Anmeldetag: **30.06.80**

## (54) Aufarbeitungsverfahren für Polycarbonate.

(30) Priorität: **13.07.79 DE 2928444**

(43) Veröffentlichungstag der Anmeldung: **11.02.81 Patentblatt 81/6**

(45) Bekanntmachung des Hinweises auf die Patenterteilung: **02.01.85 Patentblatt 85/1**

(84) Benannte Vertragsstaaten: **DE FR GB IT NL**

(56) Entgegenhaltungen:
**BE - A - 555 894**
**DE - A - 1 645 054**
**GB - A - 963 322**
**US - A - 3 184 431**
**US - A - 3 294 741**

**Patents Abstracts of Japan Band 1, Nr. 4, 10. März 1977, Seite 91 C 76**
**Houben-Weyl Methoden der organischen Chemie, Band I/1 (1958), S. 213 bis 221**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Goossens, John, Ing.-grad., Roggendorfstrasse 51, D-5000 Köln 80 (DE)**
Erfinder: **Bottenbruch, Ludwig, Dr., Wöhlerstrasse 5, D-4150 Krefeld (DE)**
Erfinder: **Freitag, Dieter, Dr., Hasenheide 10, D-4150 Krefeld (DE)**

**EP 0 023 570 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Aufarbeitung von alkalischen Zweiphasengemischen, die bei der Synthese von Polycarbonaten nach dem Zweiphasengrenzflächenverfahren anfallen, das dadurch gekennzeichnet ist, daß zur Trennung des nach Ansäuern der abgetrennten organischen Phase anfallenden sauren Zweiphasengemisches in eine organische und eine wäßrige Phase dem Gemisch ein oder mehrere kationische Emulgier- und/oder Dispergiermittel zugesetzt werden und/oder, daß die Wäsche der nach dem Ansäuern abgetrennten organischen Phase mit Wasser vorgenommen wird, dem ein oder mehrere wasserlösliche, organische, anionische Verbindungen zugesetzt werden.

Gegenstand der vorliegenden Erfindung ist auch ein Verfahren zur Aufarbeitung von alkalischen Zweiphasengemischen, die bei der Synthese von Polycarbonaten, die mindestens 50 Gew.% vom Bis-(3,5-dimethyl-4-hydroxyphenyl)-propan sich ableitende Einheiten enthalten, nach dem Zweiphasengrenzflächenverfahren anfallen, das dadurch gekennzeichnet ist, daß zur Trennung des anfallenden alkalischen Zweiphasengemisches in eine organische und eine wäßrige Phase dem Gemisch ein oder mehrere kationischen Emulgier- und/oder Dispergiermittel zugesetzt werden.

Die Synthese von hochmolekularen, thermoplastischen Polycarbonaten nach dem Zweiphasengrenzflächenverfahren wird beispielsweise beschrieben in H. Schnell, Chemistry and Physics of Polycarbonates, New York-London-Sidney, Interscience Publishers 1964, Polymer Reviews, Vol. 9, in dem US-Patent 3 275 601, in den Deutschen Offenlegungsschriften 2 063 050 und 2 211 957.

Bei der Synthese von hochmolekularen, thermoplastischen Polycarbonaten nach diesem Verfahren werden nach abgeschlossener Polykondensation Zweiphasengemische erhalten, die aus einer organischen Phase und einer wäßrig-alkalischen Phase bestehen. Die organische Phase besteht im allgemeinen aus einem oder mehreren organischen Lösungsmitteln, in denen das Polycarbonat gelöst enthalten ist. Die wäßrig-alkalische Phase besteht im allgemeinen aus einer Lösung von Alkalihydroxid und Salzen, die bei der Kondensationsreaktion gebildet werden. Bei Verwendung von NaOH als Alkalihydroxid werden bei der Kondensation beispielsweise NaCl und $Na_2CO_3$ gebildet, die in der wäßrigen Phase gelöst enthalten sind. Neben den genannten Stoffen sind im allgemeinen noch Katalysatoren, wie z. B. tertiäre Amine, quarternäre Ammonium-, Arsonium- und Phosphoniumverbindungen in einer der Phasen oder in beiden Phasen gelöst.

Die Isolierung des synthetisierten Polycarbonats setzt bekanntlich eine Abtrennung und Reinigung der erhaltenen organischen Polycarbonatlösungen voraus.

Die Abtrennung des Alkalihydroxids, der Katalysatoren und der Salze von der organischen Polycarbonatlösung kann wie folgt vorgenommen werden:

1. Trennung des alkalischen Zweiphasengemisches durch Absitzen oder Zentrifugieren (diskontinuierlich oder kontinuierlich). Eventuell Mischung der abgetrennten organischen Phase mit reiner verdünnter Alkalilauge und Wiederholung der Trennung zur Entfernung nicht umgesetzten Bisphenolats. Gegebenenfalls Wiederholung des Vorgangs.
2. Mischung der organischen Phase mit wäßriger Säure, um Restspuren Alkalihydroxid zu neutralisieren und gegebenenfalls Reste von Katalysatoren aus der organischen Lösung zu entfernen (z. B. Amine als Ammoniumsalze). Trennung wie unter 1) beschrieben. Gegebenenfalls Wiederholung des Vorgangs.
3. Mischung der organischen Phase mit Wasser, um Salz- und Säurespuren aus der organischen Lösung zu entfernen. Trennung wie unter 1) beschrieben. Gegebenenfalls Wiederholung des Vorgangs.

Die Menge an verdünnter Alkalilauge zur Entfernung nicht umgesetzten Bisphenolats aus der organischen Phase, die Menge an wäßriger Säure zur Neutralisation von Restspuren Alkalihydroxyd und Katalysator in der organischen Phase und die Menge an Wasser zur Entfernung von Salz- und Säurespuren aus der organischen Phase werden im allgemeinen so gewählt, daß das Volumenverhältnis wäßrige Phase zu organischer Phase zwischen 0,01 zu 1 bis 5 zu 1 liegt, bevorzugt sind Verhältnisse zwischen 0,1 zu 1 bis 2 zu 1.

Im allgemeinen muß zumindest der unter 3) aufgeführte Waschvorgang mehrfach wiederholt werden, um ausreichend gereinigte Polycarbonatlösungen zu erhalten. Dies hängt damit zusammen, daß die Trennung der alkalischen beziehungsweise sauren bis neutralen Zweiphasengemische in der Praxis nicht quantitativ erfolgt, da selbst bei guter Trennung im allgemeinen immer noch kleinste Tröpfchen an wäßriger Phase in der organischen Phase enthalten sind. Die Phasentrennung sowohl im alkalischen als auch im sauren und neutralen Bereich ist im allgemeinen von den für die Polycarbonatsynthese eingesetzten Rohstoffen und Reaktionsbedingungen abhängig. In vielen Fällen ist die Phasentrennung so schlecht, daß eine ausreichende Reinigung der Polycarbonatlösung nicht nur unter großen Materialverlusten, sondern überhaupt nicht mehr möglich ist.

Überraschend wurde nun gefunden, daß die unter 1), 2) und 3) beschriebenen Schritte zur Reinigung der organischen Polycarbonatlösung durch folgende Maßnahmen ganz außerordentlich verbessert werden können, und zwar die Schritte 1) und 2) durch Zusatz von kationischen Emulgier- und Dispergiermitteln, und der Schritt 3) durch Zusatz von wasserlöslichen, organischen, anionischen Verbindungen.

Diese Maßnahmen bedingen eine bedeutend verbesserte Phasentrennung, die eine verminderte Anzahl von Waschgängen zuläßt und in vielen Fällen eine Bewältigung des Reinigungsproblems überhaupt erst ermöglicht.

Erfindungsgemäß geeignete kationische Emulgier- und Dispergiermittel sind beispielsweise in Ullmanns Encyklopädie der technischen Chemie, Band 10, Seiten 449—473, Verlag Chemie, Weinheim/Bergstraße, 1975, und in Mc. Cutcheon's Monographie Detergents and Emulsifiers, Illinois/Oak Park, USA, beschrieben.

Zu den erfindungsgemäß geeigneten kationischen Emulgier- und Dispergiermitteln zählen z. B. quartäre Alkylammoniumsalze wie Cetyltrimethylammoniumchlorid, Alkylbenzylammoniumsalze wie Methyldodecylbenzyltrimethylammoniumchlorid, Alkylpyridiniumsalze wie Cetylpyridiniumchlorid, primäre, sekundäre und tertiäre Fettaminsalze, quartäre Amidoaminverbindungen, Alkanolaminsalze von Estern und Ethern, Alkylimidazoliniumsalze, Alkyloxazoliniumsalze, Aminoxide und andere kationische Produkte und Amine, kationische Polymere, Polyamine, Polyamidamine, Polyimine und Ampholyte, wie z. B. Eiweiß und Eiweißderivate. Von den genannten Produkten sind die zu bevorzugen, die mindestens ein quarterniertes N-Atom aufweisen. Es können auch Mischungen von mindestens zwei der vorgenannten Substanzen benutzt werden.

Die kationischen Emulgier- und Dispergiermittel werden im allgemeinen in Mengen von 10—10 000 ppm, bezogen auf das Gewicht der wäßrigen Phase des Zweiphasengemisches, eingesetzt. Bevorzugt werden im allgemeinen Mengen von 100—1000 ppm, bezogen auf das Gewicht der wäßrigen Phase.

Erfindungsgemäß geeignete wasserlösliche, organische anionische Verbindungen sind beispielsweise in Ullmanns Encyclopädie der technischen Chemie, Band 10, Seiten 449—473, Verlag Chemie, Weinheim/Bergstraße, 1975, und in Mc. Cutcheon's Monographie, Detergents and Emulsifiers, Oak Park/Illinois/USA, beschrieben.

Zu den erfindungsgemäß geeigneten wasserlöslichen, organischen anionischen Verbindungen zählen z. B. Alkylsulfonate, Alkylsulfate und Naphthalinsulfonate oder andere Sulfate und Sulfonate wie in Mc. Cutcheon's Monographie, Detergents and Emulsifiers, 1978, beschrieben. Besonders geeignet sind anionische Polymere, die Carboxyl- oder Phosphat-Gruppen enthalten, wie z. B. Carboxymethylcellulose, Polyacrylsäure, Polymethacrylsäure und komplexe organische Polyphosphorsäureesteranhydride. Ganz besonders geeignet sind Polymere, die Sulfat- und Sulfonat-Gruppen enthalten, wie z. B. Polystyrolsulfonat, Polyvinylsulfat, Ligninsulfonat, Zellulosesulfat, polymerisierte Alkylarylsulfonsäure, polymerisierte Benzylalkylsulfonsäuren und sulfonierte aromatische Formaldehydharze, außerdem Alginate. Die genannten Salze beziehungsweise Säuren können sowohl in Form der freien Säuren als auch in Form der Salze eingesetzt werden. Auch Derivate der genannten Substanzen können eingesetzt werden. Mischungen von mindestens zwei der vorgenannten Substanzen können ebenso Verwendung finden.

Die wasserlöslichen, anionischen, organischen Verbindungen werden in Mengen von 0,1—1000 ppm, bezogen auf das Gewicht der wäßrigen Phase, zugegeben. Bevorzugt werden Mengen von 5—100 ppm, bezogen auf das Gewicht der wäßrigen Phase, eingesetzt.

Überraschend ist, daß für die erfindungsgemäßen Verbesserungen der Phasentrennung Maßnahmen ergriffen werden, die üblicherweise zu einer Verschlechterung beziehungsweise völligen Verhinderung der Phasentrennung führen. Überraschend ist weiter, daß die zuzusetzenden Mengen an kationischen Emulgier- und Dispergiermitteln sowie an wasserlöslichen, organischen, anionischen Verbindungen außerordentlich klein sind.

Die Vorteile der erfindungsgemäßen Aufarbeitung der Polycarbonatlösungen liegen auf der Hand, sie bestehen insbesondere für die technische Durchführung des Zwesiphasengrenzflächenpolycarbonatherstellungsverfahrens in einer großen Ersparnis an Zeit, Material und Kosten. Für manche Polycarbonatgruppen wird damit die technische Produktion überhaupt erst wirtschaftlich.

Das beschriebene Verfahren kann mit Vorteil bei der Aufarbeitung von aromatisch-aliphatischen Polycarbonaten und insbesondere von aromatischen Polycarbonaten angewendet werden, die nach dem Phasengrenzflächenverfahren hergestellt werden. Beispiele für aliphatisch-aromatische Polycarbonate sind in den Deutschen Offenlegungsschriften 2 702 626, 2 636 784, 2 651 639 und 2 636 783 aufgeführt.

Aromatische Polycarbonate werden beispielsweise in den eingangs erwähnten Literaturstellen sowie in den US-Patentschriften 3 028 365, 2 999 835, 3 148 172, 2 991 273, 3 271 367 und 2 999 846 sowie in den deutschen Offenlegungsschriften 2 063 052, 1 570 703, 2 211 956, 2 248 817 und 2 615 038, beschrieben.

Die erfindungsgemäße Aufarbeitung der Polycarbonatlösungen insbesondere mit Erfolg verwendbar, wenn die Polycarbonate aus mindestens einem der folgenden Bisphenole nach dem Zweiphasengrenzflächenverfahren hergestellt werden:

2,2-Bis-(4-hydroxyphenyl)-propan
Bis-(4-hydroxyphenyl)-sulfid

1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3,5-dichlor-4-hydroxyphenyl)-propan
2,2-Bis-(3,5-dibrom-4-hydroxyphenyl)-propan
Bis-(3,5-dimethyl-4-hydroxyphenyl)-methan
2,2-Bis-(3,5-dimethyl-4-hydroxyphenyl)-propan
α,α'-Bis-(3,5-dimethyl-4-hydroxyphenyl)-p-diisopropylbenzol und
1,1,3,4,6-Pentamethyl-3-(3,5-dimethyl-4-hydroxyphenyl)-indan-5-ol.

Besonders eignet sich die erfindungsgemäße Aufarbeitung bei der Herstellung von Polycarbonaten in denen mindestens 50 Gew.-%, bevorzugt mindestens 85 Gew.-% an Einheiten enthalten sind, die sich von 2,2-Bis-(4-hydroxyphenyl)-propan oder 2,2-Bis-(3,5-dimethyl-4-hydroxyphenyl)-propan ableiten.

Ganz besonders eignet sich die erfindungsgemäße Aufarbeitung bei der Herstellung von Polycarbonaten, in denen mindestens 50 Gew.-%, bevorzugt mindestens 85 Gew.-% an Einheiten enthalten sind, die sich von 2,2-Bis-(3,5-dimethyl-4-hydroxyphenyl)-propan ableiten.

## A. Herstellung verschiedener Polycarbonatlösungen

### Beispiel 1

Herstellung von Polycarbonat aus 2,2-Bis-(3,5-dimethyl-4-hydroxyphenyl)-propan nach dem Zweiphasengrenzflächenverfahren alkalisches Gemisch.

Zu 858 ml destilliertem Wasser und 326 ml (6,2 Mol NaOH) 50%iger wäßriger Natronlauge werden 568,8 g (2 Mol) 2,2-Bis-(3,3-dimethyl-4-hydroxyphenyl)-propan (94 gew.-%ig, hergestellt nach dem Ionenaustauscherverfahren aus 97 gew.-%igem Dimethylphenol und Aceton und nur durch Abdestillieren und Desorption des Reaktionsgemisches von Nebenprodukten befreit.) und 5,6 g (0,06 Mol) Phenol gelöst. Nach Zugabe von 448 ml Chlorbenzol, 1490 ml Methylenchlorid und 1,92 g (0,006 Mol) Tetrabutylammoniumbromid, werden unter Rührung 227,4 g (2,30 Mol) Phosgen gasförmig in 60 Minuten in das Gemisch eingeleitet. Nach Zugabe von 11,0 ml (0,08 Mol) Triethylamin wird noch 30 Minuten lang gerührt. Das erhaltene Zweiphasengemisch ist eine Emulsion, die auch nach mehrstündigem Stehen nicht in die organische und die wäßrige Phase aufgetrennt ist. Der Ansatz wird mit einem Methylenchlorid/Chlorbenzolgemisch 80/20 Gewichtsteile (gleiches Gemisch wie in der Reaktion verwendet) soweit verdünnt, daß die Polycarbonatlösung 13%ig wird (nach Reaktion ca. 20%ig). Außerdem wird die wäßrige Phase durch Zusatz von destilliertem Wasser so vergrößert, daß das Volumen der organischen Phase gleich dem Volumen der wäßrigen Phase ist. Nach dem Zusatz des organischen Lösungsmittels und des Wassers wird noch einige Minuten gerührt. Es wird ein alkalisches emulgiertes Zweiphasengemisch erhalten.

### Beispiel 2

Polycarbonatansatz wie Beispiel 1; saures Gemisch

Der Polycarbonatansatz wird wie in Beispiel 1 durchgeführt. Nach der Verdünnung mit organischem Lösungsmittel wird der alkalische Ansatz unter Rühren mit konzentrierter Phosphorsäure auf einen pH-Wert von 2 oder darunter angesäuert und anschließend ebenso wie Ansatz Beispiel 1 mit destilliertem Wasser so verdünnt, daß das Volumen der wäßrigen Phase gleich dem der organischen Phase ist, und ebenso gerührt. Es wird ein saures emulgiertes Zweiphasengemisch erhalten.

### Beispiel 3

Herstellung von Polycarbonat aus 2,2-Bis-(3,5-dimethyl-4-hydroxyphenyl)-propan nach dem Zweiphasengrenzflächenverfahren; saure abgetrennte organische Phase.

In 2286 ml destilliertem Wasser und 614,4 ml (10,22 Mol NaOH) 45%iger Natronlauge werden 568,8 g (2 Mol) 2,2-Bis-(3,5-dimethyl-4-hydroxyphenyl)-propan und 5,6 g (0,06 Mol) Phenol gelöst. Nach Zugabe von 1490 ml Methylenchlorid, 448 ml Chlorbenzol, 7,72 g (0,024 Mol) Tetrabutylammoniumbromid und 5,70 ml (0,024 Mol) Tri-n-butylamin werden unter Rühren 336,4 g (3,4 Mol) Phosgen gasförmig in 60 Minuten in das Gemisch eingeleitet. Nach der Einleitung von 250 g Phosgen werden noch 96 ml 45%iger Natronlauge zugesetzt. Nach Zugabe von 5,6 ml (0,04 Mol) Triäthylamin wird 30 Minuten gerührt. Das Zweiphasengemisch trennt danach sofort scharf in die organische und die wäßrige Phase auf. Die abgetrennte organische Phase wird mit Methylenchlorid/Chlorbenzol-Gemisch 80/20 Gew.-Teile (wie in Reaktion) auf eine 13%ige Polycarbonatlösung verdünnt (nach Reaktion ca. 20%ig) und dann mit 2%iger wäßriger Phosphorsäure im Volumenverhältnis 2/1 versetzt und mehrere Minuten gerührt. Die Abtrennung der wäßrigen sauren Phase von der organischen erfolgt auf einem kontinuierlich arbeitenden Separator. Die so erhaltene organische Phase wird für weitere Versuche eingesetzt.

B. Aufarbeitung der Polycarbonatlösungen

Beispiele 4—8

Trennung alkalischer Zweiphasengemische (Schritt 1 in der Beschreibung)

Alkalisches Zweiphasengemisch, wie es nach Beispiel 1 erhalten wird, wird nach gutem Schütteln mit einer Laborzentrifuge in einem Zentrifugenröhrchen 5 Minuten bei 5000 Umdrehungen/Minute zentrifugiert (Beispiel 4, Tabelle 1). Ebenso wird alkalisches Zweiphasengemisch, dem kationische Zusätze zugesetzt werden, nach gutem Schütteln zentrifugiert (Beispiele 5—8, Tabelle 1). Nach dem Zentrifugieren befindet sich unten im Zentrifugenröhrchen die abgetrennte organische Phase, die noch bis zu einigen Prozent Wasser enthalten kann, darüber eine weiße Cremeschicht und darüber eine klare oder trübe Wasserschicht. Je geringer die Dicke der Cremeschicht, desto besser ist die Trennbarkeit des Zweiphasengemisches einzustufen. Bei guter Abtrennung ist die Wasserphase meist klar und die organische Phase meist nur noch leicht trüb. Aus Tabelle 1 geht hervor, das die kationischen Zusätze eine beträchtliche Verbesserung der alkalischen Trennung ergeben.

Tabelle 1

Trennung alkalischer Zweiphasengemische (zu den Beispielen 4–8)

| Bsp. Nr. | Kationischer Zusatz Substanz | Menge bezogen auf wäßrige Phase (ppm) | Höhe Cremeschicht (mm) |
|---|---|---|---|
| 4 | ohne | 0 | 11 |
| 5 | a | 250 | 1 |
| 6 | b | 250 | 2 |
| 7 | c | 500 | 0 |
| 8 | d | 500 | < 0,5 |

a =
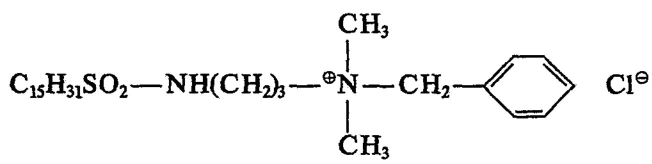

b = Mischung aus Methyldodecylbenzyltrimethylammoniumchlorid und Dodecylxylenbis-(trimethylammoniumchlorid).

c =
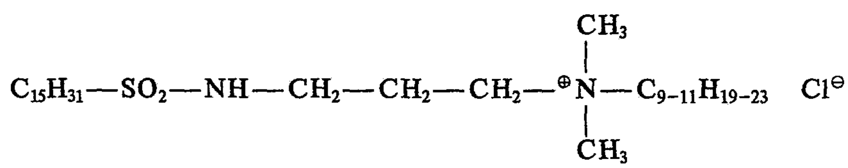

d =
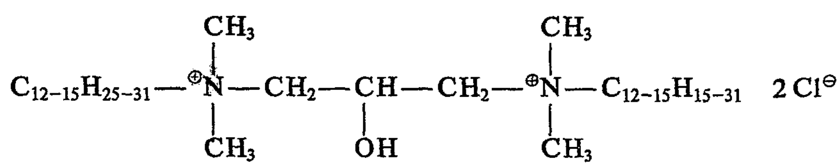

*) Gesamthöhe organische Phase + Cremeschicht + wäßrige Phase gleich 100 mm.

## Beispiele 9–12

### Trennung saurer Zweiphasengemische (Schritt 2 in der Beschreibung)

Saures Zweiphasengemisch, wie es nach dem Beispiel 2 erhalten wird, wird nach gutem Schütteln zentrifugiert, wie in Beispiel 4 beschrieben (Beispiel 9, Tabelle 2). Ebenso wird saures Zweiphasengemisch nach Zugabe kationischer Zusätze, wie in den Beispielen 5–8 beschrieben, zentrifugiert. Die Ergebnisse gehen aus Tabelle 2 hervor (Beispiele 10–12). Sie sind zu beurteilen, wie für die Beispiele 5–8 beschrieben. Es zeigt sich, daß kationische Zusätze eine beträchtliche Verbesserung der Trennung saurer Zweiphasengemische bewirken.

Tabelle 2

Trennung saurer Zweiphasengemische (zu den Beispielen 9–12)

| Bsp. Nr. | Kationischer Zusatz bzw. Scherung | | Höhe Cremeschicht*) |
|---|---|---|---|
| | Substanz | Menge, bezogen auf wäßrige Phase (ppm) | (mm) |
| 9 | ohne | 0 | 8 |
| 10 | e | 250 | $<0{,}5$ |
| 11 | f | 250 | 0 |
| 12 | g | 250 | 0 |

e = Benzyldodecyldimethylammoniumchlorid

f =
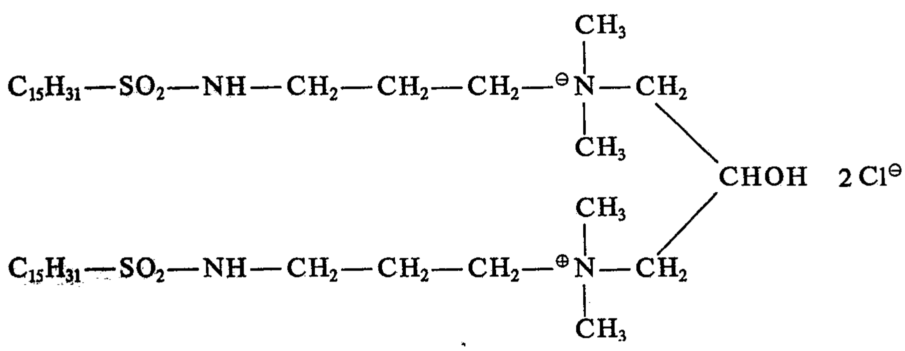

g =
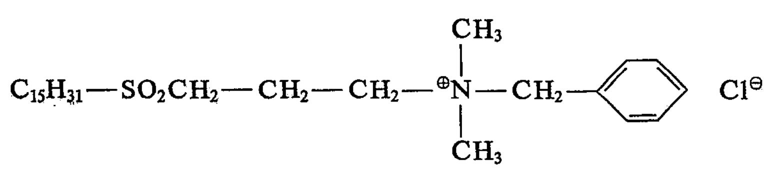

*) = s. Tab. 1.

## Beispiele 13–25

### Wasserwäsche der nach Ansäuern abgetrennten organischen Phase (Schritt 3 zu der Beschreibung)

Organische Phase, nach dem Ansäuern abgetrennt, wie sie in Beispiel 3 erhalten wird, wird im Verhältnis 1/1 Vol.-Teile mit destilliertem Wasser versetzt. 100 g dieses Gemisches werden 30 sec. mit einem Ultraturrax behandelt (Typ 45, Fa Jahnke und Kunkel, bei 10 000 Umdrehungen/Minute). Die Waschbarkeit der organischen Phase ist gut, wenn nach der Ultraturrax-Behandlung das Gemisch sofort von selbst in zwei Phasen auftrennt, die mehr oder weniger trüb sein können. Sie ist schlecht, wenn eine vollständige Emulsion erhalten wird, die nicht sofort von selbst in zwei Phasen auftrennt. Die Beispiele 13–24 (siehe Tabelle 3) zeigen, daß mit anionischen Zusätzen eine verbesserte Phasentrennung bei der Wasserwäsche erzielt wird.

Die Beispiele 23 und 25 (siehe Tabelle 3), bei denen organische Phase aus dem Versuch gemäß Beispiel 10 eingesetzt wurde (organische Phase des Beispiels 10 nach Ansäuern in Gegenwart kationischer Verbindung und Abtrennung der Säure in der Zentrifuge) zeigen, daß durch anionische Verbindungen bei der Wasserwäsche ebenfalls eine deutliche Verbesserung erzielt werden kann, wenn die vorhergehende Trennung des sauren Zweiphasengemisches in Gegenwart kationischer Verbindungen durchgeführt wurde.

Tabelle 3

Wasserwäsche der nach dem Ansäuern abgetrennten organischen Phase (zu den Beispielen 13–25)

| Bsp. Nr. | Anionischer Zusatz Substanz | Menge bezogen auf wäßrige Phase (ppm) | Trennung der Phasen nach der Emulgierung |
|---|---|---|---|
| 13 | – | 0 | nein |
| 14 | h | 10 | ja |
| 15 | i | 2,5 | ja |
| 16 | j | 5 | ja |
| 17 | k | 10 | ja |
| 18 | l | 10 | ja |
| 19 | m | 50 | ja |
| 20 | n | 50 | ja |
| 21 | o | 50 | ja |
| 22 | p | 75 | ja |
| 23 | q | 5 | ja |
| 24 | j | 75 | ja |
| 25 | – | 0 | nein |

h = Polystyrolsulfonsäure
i = Polyvinylsulfat, K-Salz
j = Polystyrolsulfonsäure, Na-Salz
k = Ligninsulfonat
l = Alginat
m = Carboxymethylcellulose, Na-Salz
n = 2-Äthylhexylpolyphosphorsäureesteranhydrid, K-Salz
o = Kondensiertes Naphthalinsulfonat, Na-Salz
p = Alkylsulfonat, Na-Salz
q = Zellulosesulfat, Na-Salz

Zu den Beispielen 4–25

Die Ergebnisse, die in diskontinuierlich arbeitenden Zentrifugen erhalten wurden (s. Beispiele 4–25), lassen sich auch auf kontinuierlich arbeitende Zentrifugen, wie Separatoren, übertragen.

**Patentansprüche**

1. Verfahren zur Aufarbeitung von alkalischen Zweiphasengemischen, die bei der Synthese von Polycarbonaten nach dem Zweiphasengrenzflächenverfahren anfallen, dadurch gekennzeichnet, daß zur Trennung des nach Ansäuern der abgetrennten organischen Phase anfallenden sauren Zweiphasengemisches in eine organische und eine wäßrige Phase dem Gemisch ein oder mehrere kationische Emulgier- und/oder Dispergiermittel zugesetzt werden, und/oder daß die Wäsche der nach dem Ansäuern abgetrennten organischen Phase mit Wasser vorgenommen wird, dem ein oder mehrere wasserlösliche, organische, anionische Verbindungen zugesetzt werden.

2. Verfahren gemäß Anspruch 1, dadurch gekennzeichnet, daß die kationischen Emulgier- und Dispergiermittel in Mengen von 10 bis 10 000 ppm, bezogen auf das Gewicht der wäßrigen Phase des Zweiphasengemisches, eingesetzt werden.

3. Verfahren nach Anspruch 2, dadurch gekennzeichnet, daß die kationischen Emulgier- und Dispergiermittel in Mengen von 100 bis 1000 ppm, bezogen auf das Gewicht der wäßrigen Phase des Zweiphasengemisches, eingesetzt werden.

4. Verfahren gemäß Anspruch 1, dadurch gekennzeichnet, daß die wasserlöslichen, organischen anionischen Verbindungen in Mengen von 0,1 bis 1000 ppm, bezogen auf das Gewicht der wäßrigen Phase des Zweiphasengemisches, eingesetzt werden.

5. Verfahren gemäß Anspruch 4, dadurch gekennzeichnet, daß die wasserlöslichen organischen, anionischen Verbindungen in Mengen von 5 bis 100 ppm, bezogen auf das Gewicht der wäßrigen Phase des Zweiphasengemisches, eingesetzt werden.

6. Verfahren zur Aufarbeitung von alkalischen Zweiphasengemischen, die bei der Synthese von Polycarbonaten, die mindestens 50 Gew.% vom Bis-(3,5-dimethyl-4-hydroxyphenyl)-propan sich ableitende Einheiten enthalten, nach dem Zweiphasengrenzflächenverfahren anfallen, dadurch gekennzeichnet, daß zur Trennung des anfallenden alkalischen Zweiphasengemisches in eine organische und eine wäßrige Phase dem Gemisch ein oder mehrere kationischen Emulgier- und/oder Dispergiermittel zugesetzt werden.

## Claims

1. Process for working up alkaline two-phase mixtures which are obtained in the synthesis of polycarbonates by the two-phase boundary process, characterised in that for the separation of the acidic two-phase mixture, obtained after acidification of the separated organic phase, into an organic and an aqueous phase, one or more cationic emulsifying and/or dispersing agents are added to the mixture, and/or in that the washing of the organic phase separated off after acidification is carried out with water, to which one or more water-soluble, organic, anionic compounds are added.

2. Process according to Claim 1, characterised in that the cationic emulsifying and dispersing agents are used in quantities of 10 to 10,000 ppm, based on the weight of the aqueous phase of the two-phase mixture.

3. Process according to Claim 2, characterised in that the cationic emulsifying and dispersing agents are used in quantities of 100 to 1,000 ppm, based on the weight of the aqueous phase of the two-phase mixture.

4. Process according to Claim 1, characterised in that the water-soluble, organic, anionic compounds are used in quantities of 0.1 to 1,000 ppm, based on the weight of the aqueous phase of the two-phase mixture.

5. Process according to Claim 4, characterised in that the water-soluble, organic, anionic compounds are used in quantities of 5 to 100 ppm, based on the weight of the aqueous phase of the two-phase mixture.

6. Process for working up alkaline two-phase mixtures which are obtained in the syntheses of polycarbonates, containing at least 50% by weight of units derived from bis-(3,5-dimethyl-4-hydroxyphenyl)-propane, by the two-phase boundary process, characterised in that for the separation of the resulting alkaline two-phase mixture into an organic and an aqueous phase one or more cationic emulsifying and/or dispersing agents are added to the mixture.

## Revendications

1. Procédé pour traiter des mélanges alcalins à deux phases obtenus à la synthèse des polycarbonates par la technique à l'interface de deux phases, caractérisé en ce que, pour séparer le mélange acide à deux phases obtenu après acidification de la phase organique séparée en une phase organique et une phase aqueuse, on ajoute au mélange un ou plusieurs agents émulsionnants et/ou dispersants cationiques et/ou en ce que le lavage de la phase organique séparée après acidification est effectué à l'aide d'eau à laquelle on a ajouté un ou plusieurs composés organiques anioniques solubles dans l'eau.

2. Procédé selon la revendication 1, caractérisé en ce que l'on utilise les agents émulsionnants et dispersants cationiques en quantité de 10 à 10 000 ppm par rapport au poids de la phase aqueuse du mélange à deux phases.

3. Procédé selon la revendication 2, caractérisé en ce que l'on utilise les agents émulsionnants et dispersants cationiques en quantité de 100 à 1000 ppm par rapport au poids de la phase aqueuse du mélange à deux phases.

4. Procédé selon la revendication 1, caractérisé en ce que l'on utilise les composés organiques anioniques solubles dans l'eau en quantité de 0,1 à 1000 ppm par rapport au poids de la phase aqueuse du mélange à deux phases.

5. Procédé selon la revendication 4, caractérisé en ce que l'on utilise les composés organiques anioniques solubles dans l'eau en quantité de 5 à 100 ppm par rapport au poids de la phase aqueuse du mélange à deux phases.

6. Procédé pour traiter des mélanges alcalins à deux phases obtenus à la synthèse de polycarbonates contenant au moins 50% en poids de motifs dérivant du bis-(3,5-diméthyl-4-hydroxyphényl)-propane, par la technique à l'interface de deux phases, caractérisé en ce que, pour séparer le mélange alcalin à deux phases obtenu en une phase organique et une phase aqueuse, on ajoute au mélange un ou plusieurs agents émulsionnants et/ou dispersants cationiques.